(19) Europäisches Patentamt
European Patent Office
Office européen des brevets

(11) Publication number: **0 029 308**
**A2**

# (12) EUROPEAN PATENT APPLICATION

(21) Application number: **80303783.7**

(22) Date of filing: **24.10.80**

(51) Int. Cl.³: **G 01 F 9/02**

(30) Priority: **26.10.79 GB 7937194**

(43) Date of publication of application: **27.05.81**
**Bulletin 81/21**

(84) Designated Contracting States: **AT BE CH DE FR GB IT LI LU NL SE**

(71) Applicant: **Cashmore, Peter Roseby, Cherokee Woodhurst Park, Oxted Surrey (GB)**

(72) Inventor: **Cashmore, Peter Roseby, Cherokee Woodhurst Park, Oxted Surrey (GB)**

(74) Representative: **Crawford, Andrew Birkby et al, A.A. THORNTON & CO. Northumberland House 303-306 High Holborn, London WC1V 7LE (GB)**

## (54) Electronic fuel consumption measuring apparatus and method.

(57) Electronic measuring apparatus, specifically for measuring the fuel consumption of a vehicle, is arranged to receive distance indicative signals from a speed sensor and rate of fuel flow signals from a flowmeter sensor. The values represented by these signals are then divided by suitable processing means, such as a microprocessor, and the resulting output signal provides an indication on a display of fuel consumption with respect to distance travelled. A manually activatable calibration circuit causes storage of the value of the speed-dependent signal at the moment of manual activation and the microprocessor makes use of this stored reference value as a weighting factor for the calculation of fuel consumption. Accordingly it is arranged that the manual activation of the calibration circuit should take place at a predetermined speed, and thenceforth other speeds are calculated on the basis of the predetermined speed corresponding to the value of the speed-dependent signal at the moment of activation of the calibration circuit.

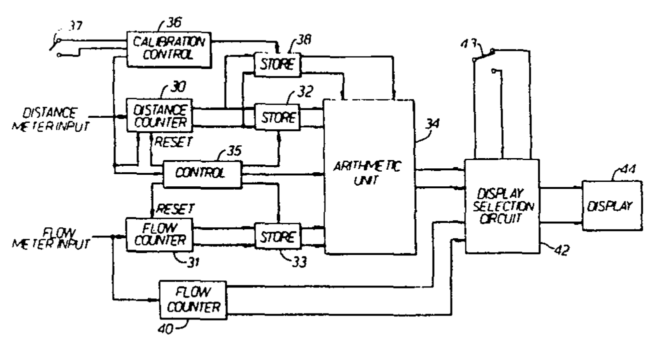


EP 0 029 308 A2

TITLE MODIFIED
see front page



Electronic Measuring Apparatus

The present invention relates to electronic indicating or measuring apparatus and more particularly to such apparatus when used to measure or indicate consumption of fuel by a vehicle.

The use of electronics in the automotive field has become an area of intense interest recently but most attention had been paid to what is known as "original equipment" i.e. equipment specifically designed to be used and installed on a certain model or specification of vehicle during manufacture. This means that many of the pieces of electronic equipment can only be used on the vehicle for which they have been specifically designed which has meant that many useful pieces of equipment have a restricted potential at the present time.

The purpose of the present invention is to provide electronic indicating or measuring apparatus which can be installed in any type of vehicle either as original equipment or as an accessory.

The present invention provides fuel consumption measuring apparatus for a motor vehicle comprising means for providing a first signal indicative of the quantity of fuel consumed, means for providing a second signal indicative of distance travelled by the vehicle, and processing means arranged

BAD ORIGINAL

to process said first and second signals to provide an output indicative of fuel consumption with respect to unit distance travelled, characterised in that there is provided manually activatable calibration means connected to said processing means and arranged to store said second signal as a reference signal upon manual activation thereof, said processing means being arranged to weight a second signal subsequently received after calibration by said reference signal whereby the apparatus may be manually calibrated in respect of distance information at a selected condition of operation of the vehicle.

The calibration means is made readily accessible to the driver whereby he can calibrate his own equipment for his own vehicle.

In order that the present invention be more readily understood, an embodiment thereof will now be described by way of example with reference to the accompanying drawings, in which:-

Figure 1 shows a front view of the apparatus;

Figure 2 shows a circuit diagram of one embodiment of the apparatus using a microprocessor; and

Figure 3 shows a block diagram of another embodiment.

The apparatus shown in the drawings will give a display of the instantaneous fuel consumption of a vehicle engine. In addition, if required, it will give the driver a read-out of the amount of fuel he has used.

The basis of the apparatus shown in Figures 1 and 2 is a microprocessor, in this case a PIC 1655A sold by General Instrument Microelectronics Ltd which is supplied with data relating to the fuel consumed and the distance travelled by the vehicle so as to give a read out of fuel consumption in miles per gallon or in litres per 100 km. The PIC 1655A was chosen because it has a clock circuit built into the chip. Other chips may be used as long as a clock circuit is provided either on the chip or by using an external clock circuit. The overall circuit will now be described in relation to Figure 2 and then the operation of the apparatus will be described.

As stated above, the heart of the apparatus is a microprocessor 10 powered from a D.C. voltage source via resistors 11 and 12 and a zener diode 13. An isolating switch in the form of a transistor 15 is provided so that the supply to the microprocessor 10 can be disconnected should the vehicle not be used for a period of time, say a week, so as to avoid excessive drain on the vehicle battery.

The microprocessor 10 is fed with two data inputs, one from a sensor (not shown) which produces a signal which can be used to derive a signal indicative of the distance travelled by the vehicle and the other from a flowmeter (not shown) disposed in the fuel line to the vehicle to accurately determine the amount of fuel consumed by the vehicle. There are a number of control inputs which will be detailed later and a display 16 is connected to the microprocessor 10 via a display drive circuit 17. The display shown is a 3-digit 7-segment display comprising light emitting diodes but any other suitable display may be utilized.

The control inputs to the microprocessor are as follows:-

Terminal RA3 is arranged to receive a signal indicative of switching on the ignition;

Terminal RC7 is arranged to receive a signal via a switch 20 instructing the microprocessor that it is in a calibrating mode which will be described in detail later;

Terminal RC5 is arranged to receive a signal via a switch 21 to control read out from the memory of the microprocessor of information concerning the fuel consumed since ignition switch on; and, optionally

Terminal RC4 is arranged to receive a signal via a switch 22 to control the calculation carried out within the microprocessor so that the display will either read in miles per gallon or litres per 100Km.

So that the driver will know whether the display is for miles per gallon or for fuel consumed (gallons), two tell-tale lamps are provided, one 24 indicating that the display is for miles per gallon and the other 25 indicating that the display is for gallons.

Before discussing the actual operation of the apparatus, it will be helpful if there is a more detailed discussion of the sensors used to provide the data to the processor. As far as the flowmeter is concerned, this is a proprietary device which will produce a pulse train at a frequency which can be assumed to be proportional to gallons per minute. Normal calibration is assumed to be 500Hz = 1 gallon per minute. This is a well calibrated output and can be used directly by the microprocessor. When one considers the distance sensor, it will be apparent that this is much more difficult to achieve with any accuracy at an acceptable cost. The real difficulty is that it is usual to detect speed and to use the speed as a measure of the distance travelled. This is what is done on "original equipment" apparatus where one knows or assumes all the parameters which affect such a procedure. However, it is well known that simply changing tyres can cause a significant error to such equipment. It is in this area that the above-disclosed circuit is so effective.

The present embodiment can use any speed sensor be it attached to a wheel of a vehicle, the propellor shaft, the speedometer drive, etc. In particular, it can be used with a sensor which senses ignition sparks as this is also indicative of the speed of the vehicle as long as one knows the gear in which one is travelling. The reason for this is that the microprocessor has a manually operable "calibrate" switch 20 which allows the microprocessor to receive data from the distance sensor in order to calibrate the microprocessor. How this is done will now be described in detail using vehicle speed as the basis for the calibration. This requires a clock circuit for the microprocessor in order to convert the pulse data from the distance sensor into a pulse rate which is then, on calibration, compared against a preprogrammed speed in the microprocessor to form the basis of further calculations at different speeds.

The driver sits in the vehicle and switches on the ignition. This clears the memory in the microprocessor via the terminal RA3. Immediately the memory is cleared, it then resets so as to accumulate data from the flowmeter to store details of the fuel used. The vehicle is then driven off and if the apparatus is newly installed or the vehicle has not been driven for some time, e.g. a week, the display 16 shows CAL indicating to the driver that it is necessary to calibrate the apparatus. The driver then takes the vehicle to a predetermined speed in a predetermined gear e.g. 30 mph in top gear, and calibrates the apparatus by pressing one or other or both of the buttons 20,21 in a preset sequence e.g. by pressing MEMORY button 21 and then calibration button 20 within a fixed period of time e.g. 5 secs. The essential requirement is that the apparatus knows when it is to be in the CALIBRATE mode. Thus, if the CALIBRATE button is well shielded from accidental operation it may be sufficient to press it only once. The driver holds his speed constant at say 30mph so that the microprocessor can accumulate data from the distance sensor indicative of the predetermined speed. The calibration mode is held for a period of time e.g. 5 secs to allow compensation for flucuations in the signal and then the microprocessor automatically switches over to give a display of instantaneous fuel consumption in miles per gallon or litres/100 Km. This continues for as long as the ignition is switched on as long as the speed is above a minimum level, say 20 mph, with the display being up-dated at intervals determined by the rate of fuel consumption set at intervals of between 3 and 10 secs. It will be appreciated that what the calibration procedure is doing is to inform the microprocessor that a particular frequency of signal from the distance transducer is equivalent to a preprogrammed speed on which the rest of the calculation preferred by the microprocessor are based.

At any time in a journey, the driver can press the MEMORY switch 21 whereupon the display will show for say 5 secs the amount of fuel consumed since ignition switch on whereupon the display will revert to a m.p.g. display. As stated above, the tell-tale lamps 24 and 25 remind the driver which is being displayed.

When the ignition is switched off the microprocessor 10 assumes that the journey is at an end and the total fuel used from ignition switch on to ignition switch off is automatically displayed for a fixed time say 30 secs. The driver can use this figure to compute average fuel consumption or the microprocessor can be programmed to give this if the distance sensor is accurate. Further, if during the 30 secs after ignition switch off when the total fuel consumed is being displayed the driver wants to retain this figure, say for the next journey or part of the journey, then he presses the MEMORY switch 21 during that time.

It is now apparent that the apparatus can be used on any vehicle since it can be calibrated by the driver. Also, if a change of specification is made to the vehicle, for example new gear ratios are used or different diameter tyres or wheels are fitted, the apparatus can be recalibrated. These advantageous features are basically accomplished by using a clock generator for converting the signal from the distance transducer to a rate signal (Hz) at a specified vehicle speed for calibration and a readily accessible manually operable calibration switch so that the driver can calibrate or recalibrate his apparatus.

BAD ORIGINAL

The above apparatus thus allows a standard microprocessor with a standard program to be used for any vehicle which is a real and distinct advantage.

The speed at which the vehicle is driven to calibrate the apparatus can be checked in a number of ways e.g. by using the vehicle speedometer, by using a rolling road, or by timing.

Figure 3 shows a block diagram of apparatus similar in operation to that of Figure 2. Distance meter and flow meter signals are respectively fed to a distance counter 30 and a flow counter 31. The outputs of these counters 30, 31 are fed to respective stores 32, 33 and thence to an arithmetic unit 34. A control circuit 35 is arranged to reset the counters 30, 31 and also controls the stores 32, 33 and the arithmetic unit 34. A calibration control circuit 36 is responsive to a calibration switch 37 to control reset of the distance counter 30 and a further store 38, whose output is fed as a weighting factor to the arithmetic unit 34.

A further flow counter 40 may be provided and its output fed to a display selection circuit 42 which under the control of a display selection switch 43 selects display on a display device 44 of either the output of the arithmetic unit 34 or the output of the flow counter 40.

In operation, pulses from the distance meter and flow meter are fed to respective counters 30, 31 (and 40 if provided). Sample counts are held in the respective stores 32, 33 and the arithmetic unit 34 performs a division of the counts to provide an output indicative of fuel consumption with respect to distance.

The control circuit 35 may be responsive to a clock to reset the counters 30, 31 after a predetermined period; alternatively it may be responsive to one or other of the counters 30, 31 reaching a predetermined pulse count. In either case, the stores 32, 33 must receive a control instruction to store the number in the respective counter before reset of the counters.

The further flow counter 40 provides a cummulative count indicative of total fuel consumption and the display selection circuit 42 selects either this total fuel consumption or the instantaneous consumption per unit distance output from the arithmetic unit 34 for display on display device 44 in response to the switch 43.

The calibration control circuit is responsive to activation of the calibration switch to reset the distance counter 30 and override the control circuit 35. After a predetermined time, or number of pulses, the output of the distance counter 30 is stored in store 38 and thenceforth applied to the arithmetic unit 34 as a weighting factor to the division of one count by the other count from stores 32, 33. It will be seen that if the calibration switch is activated at a predetermined speed of the motor vehicle, the weighting factor will effectively correct, in proportional fashion, the speed information arriving from the distance meter at all speeds.

CLAIMS:

1. Fuel consumption measuring apparatus for a motor vehicle comprising means for providing a first signal indicative of the quantity of fuel consumed, means for providing a second signal indicative of distance travelled by the vehicle, and processing means arranged to process said first and second signals to provide an output indicative of fuel consumption with respect to unit distance travelled, characterised in that there is provided manually activatable calibration means connected to said processing means and arranged to store said second signal as a reference signal upon manual activation thereof, said processing means being arranged to weight a second signal subsequently received after calibration by said reference signal whereby the apparatus may be manually calibrated in respect of distance information at a selected condition of operation of the vehicle.

2. Apparatus as claimed in claim 1 wherein said first signal providing means comprises a flow rate transducer, the signal provided therefrom being indicative of flow rate, and wherein a clock is included to provide a time reference for the apparatus.

3. Apparatus as claimed in claim 2 wherein said second signal providing means provides a speed-dependent signal, the selected condition of operation of the vehicle for calibration being a selected speed.

4. Apparatus as claimed in claim 3 wherein said second signal providing means comprises the ignition system of the vehicle.

5. Apparatus as claimed in claim 3 wherein said first and second signal providing means provide respective trains of pulses indicative of the respective quantity being monitored, said processing means being arranged to count said pulses over predetermined sampling periods, whereby said output is indicative of fuel consumption over the preceding samping period.

6. Apparatus as claimed in claim 5 wherein said calibration means comprises a switch for sending a calibrate instruction signal to said processing means, upon receipt of which said processing means counts pulses from said second signal providing means and clock pulses from said clock, and derives therefrom a weighting factor which is applied to the count of said second signal pulse train over each sampling period.

7. Apparatus as claimed in claim 5 further including a display device connected to said processing means for displaying the output thereof indicative of fuel consumption with respect to unit distance travelled.

8. Apparatus as claimed in claim 7 wherein said processing means further includes a memory arranged to store a cumulative count of said first signal pulse train, thereby to provide an indication of the overall quantity of fuel consumed.

9. Apparatus as claimed in claim 8 further including display selection means for allowing selective display on said display device of either fuel consumption with respect to unit distance travelled or overall quantity of fuel consumed.

10. A method of measuring fuel consumption in a motor vehicle comprising providing a first signal indicative of the quantity of fuel consumed, providing a second signal indicative of distance travelled by the vehicle, and processing the first and second signals to provide an output indicative of fuel consumption with respect to unit distance travelled, characterised in the further steps of manually activating a calibration means to store the second signal as a reference signal at a selected condition of operation of the vehicle, and weighting second signals subsequently received after calibration by the reference signal.

0029308

1/2

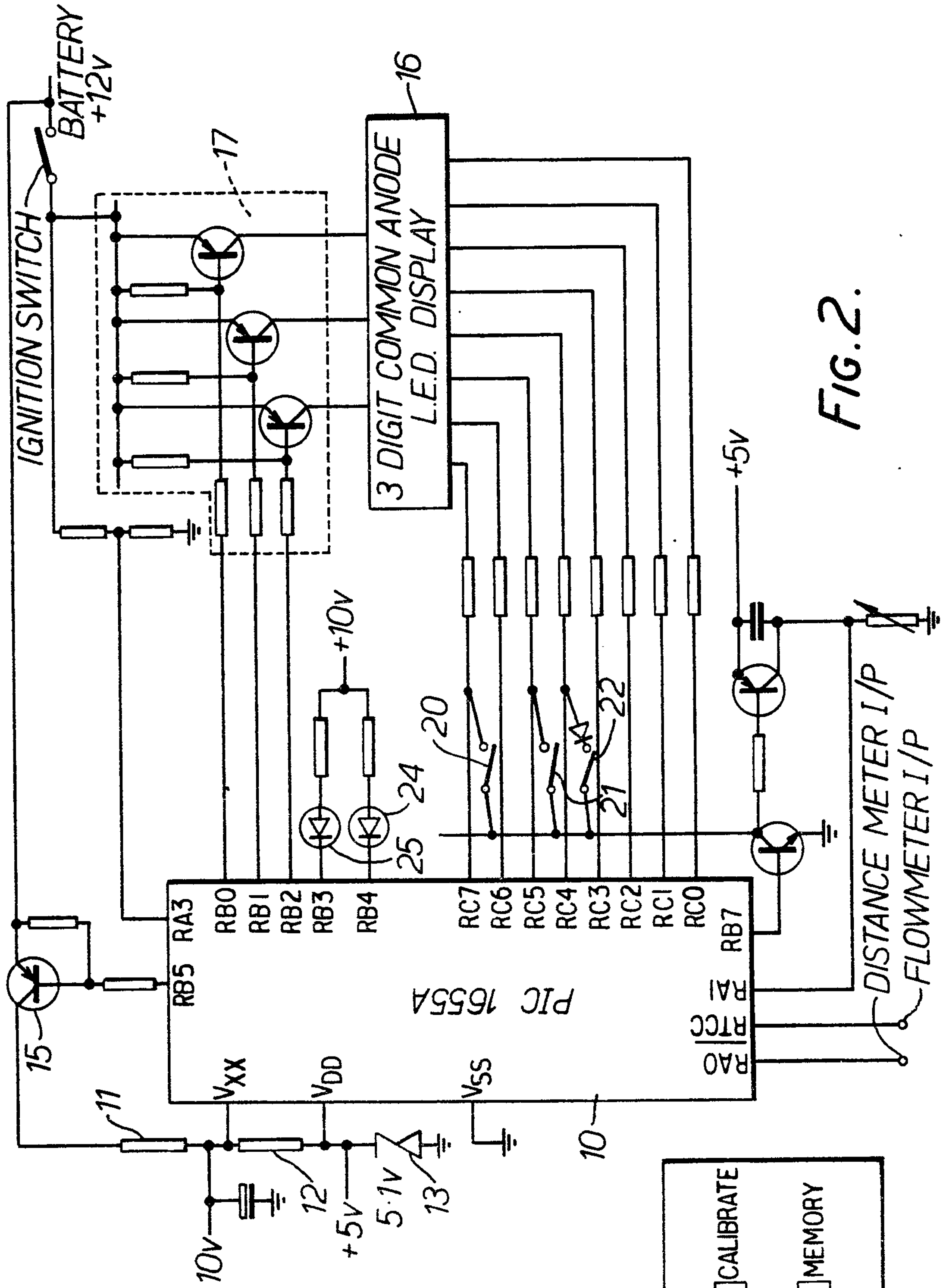


FIG.2.

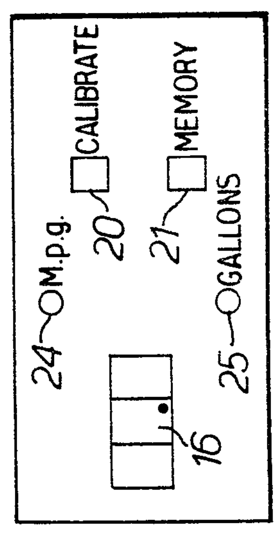


FIG.1.

0029308

2/2

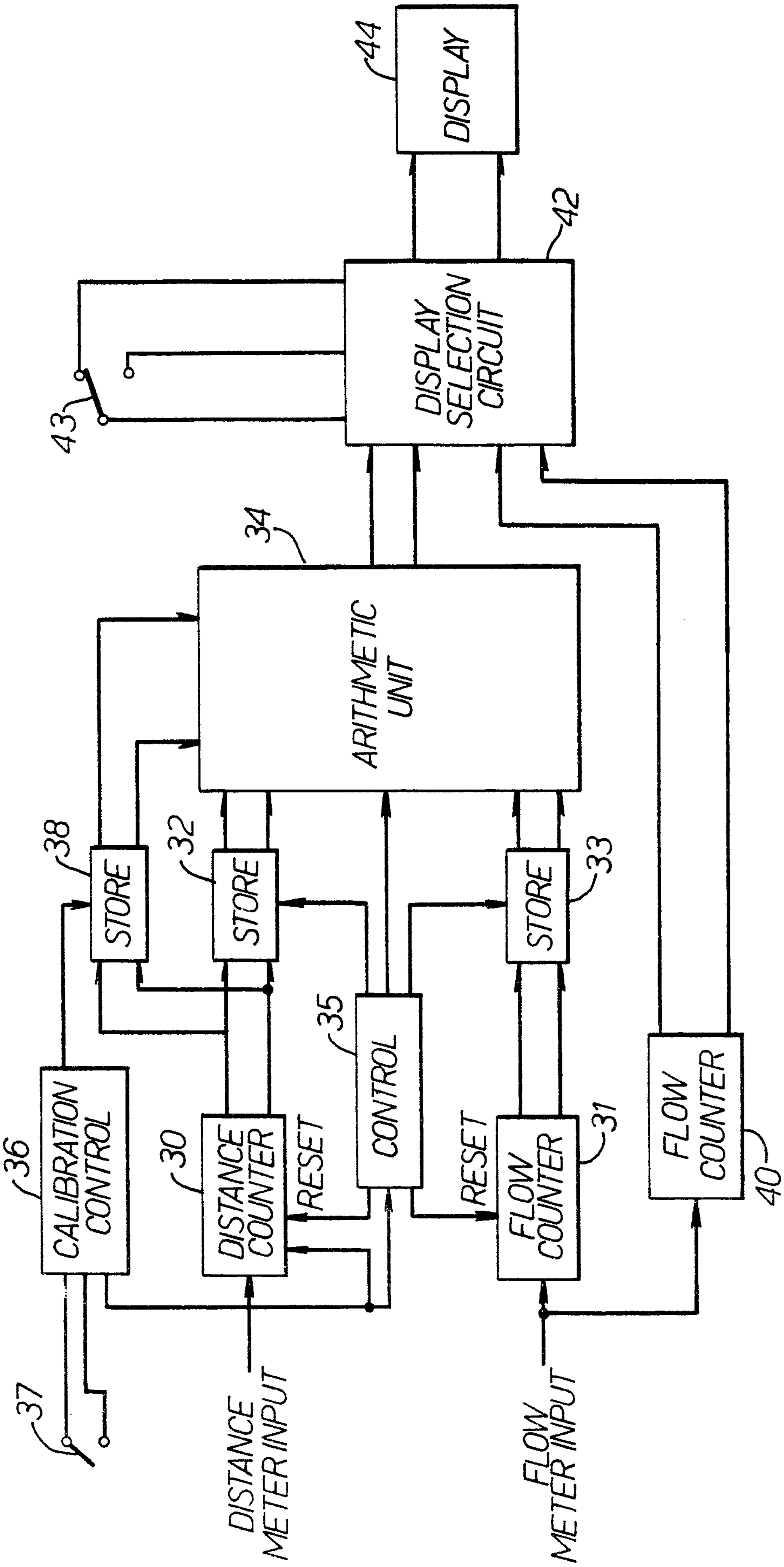


FIG. 3.